# EUROPEAN PATENT APPLICATION

(11) **EP 1 274 040 A1**
(43) Date of publication of application: **08.01.2003**
(21) Application number: 01202607.6
(22) Date of filing: 06.07.2001
(51) Int. Cl.: G06K 9/00, G07C 9/00

(54) **Method and system for privacy secured image recognition**

(71) Applicant: Koninklijke KPN N.V., 9726 AE Groningen (NL)
(72) Inventor: Roelofsen, Gerrit, 2331 AH Leiden (NL); Gelbord, Boaz Simon, 1016 VS Amsterdam (NL)
(74) Representative: Wuyts, Koenraad Maria

(57) **Abstract**

Method and system for digital image recognition. Transformation means (4) transform a reference image data string (2,3) using a transformation function (4), resulting in a transformed reference data string (5) which is stored in storage means (11). Transformation means (8) transform a new input image data string (6,7) using the same transformation function (8), resulting in a transformed input data string (9). Matching means (10) compare the transformed input data string (9) with the transformed reference data string (5) using a comparison function, resulting in a comparison result (12).

## Description

### THE FIELD OF THE INVENTION

The field of the invention is image recognition and privacy safeguarding.

### BACKGROUND OF THE INVENTION

The invention relates to a method for digital image recognition by matching an input data string resulting from scanning a physical object or at least part of thereof, with a reference data string resulting from scanning a physical reference object or at least part of thereof.

Application of digital image recognition and the number of methods for it is growing. The area of digital image recognition involves automatic identification of subjects or persons by means of algorithms that look for certain pattern matches between new images and previously recorded reference images. In most cases the goal is to be able to positively correlate two images beyond a certain probability of doubt. This has led to the widespread introduction of video cameras etc., in turn causing a violation of privacy.

### SUMMARY OF THE INVENTION

The invention aims to solve the problem of loss of privacy by masking the data involved in (personal) image recognition by means of a masking process. In the method according to the invention an input data string resulting from scanning (at least part of) a physical object is matched with (at least part of) a reference data string resulting from scanning a physical reference object, the following steps are performed:
a. the reference data string is transformed using a transformation function resulting in a transformed reference data string which is stored;
b. the input data string is transformed using the transformation function resulting in a transformed input data string;
c. the transformed input data string is compared with the transformed reference data string using a comparison function, resulting in a comparison result.

So, the aspect of the present invention is that not the image files (the input images and the reference images) themselves are investigated or stored -since those can be easily read and displayed and thus are privacy sensitive- but instead, those files (data strings) are transformed to replicas which can not (easy) be read and displayed but which certainly can be matched mutually.

One way to prevent that the data string can be read and displayed is to transform the data strings by a form of one-way function.

A specific way to prevent reading and displaying the data strings is to order the input data string and the reference data string in the form of matrices while the transformation function comprises a permutation action of the matrices, preferrably permutation of both the rows and the coloms of the matrices.

When the data strings are ordered in the form of respective matrices the transformation function may also comprise similarity tranformation of the matrices.

The physical objects may be human faces, fingerprints irises, etc.

A system fit for execution the method presented above, comprises matching means for matching an input data string resulting from scanning, by scanning means, (at least part of) a physical object, with a reference data string resulting from scanning, by scanning means, (at least part of) a physical reference object. According to the invention the system, moreover, comprises, transformation means for transforming the reference data string using a transformation function, resulting in a transformed reference data string which is stored in storage means, by transformation means for transforming the input data string using the transformation function, resulting in a transformed input data string, and by matching means for comparing the transformed input data string with the transformed reference data string using a comparison function, resulting in a comparison result.

### EXEMPLARY EMBODIMENT

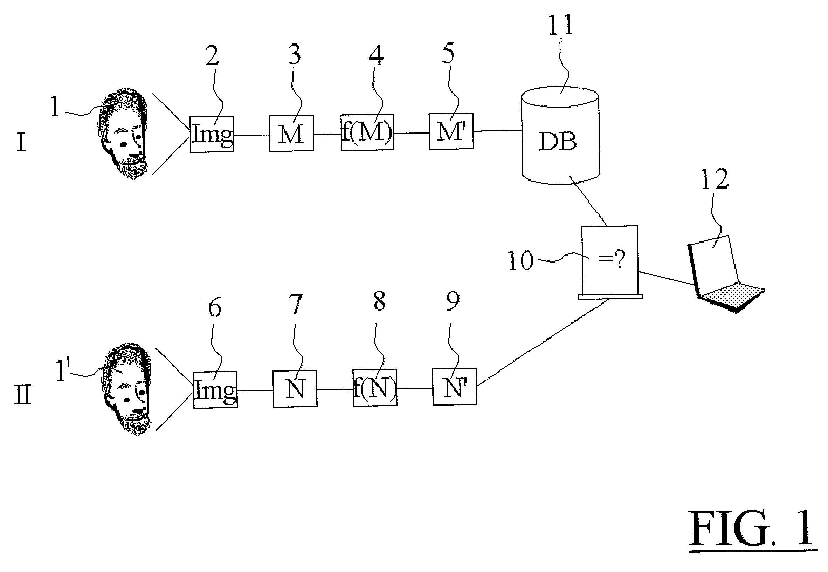

Figure 1 shows an exemplary embodiment of a system according the present invention. The system in fact comprises a part I for executing an initial stage, viz. generation, processing and storing of a reference data string, as well as an operational part II, which processes new images to be investigated.

In part I the face of a person 1 face is recorded by a video camera 2. Video camera 2 outputs a data string, which is ordered as a data matrix M, temporarily stored in a memory 3 and subsequently transformed by a transform function processor 4, permutating matrix M to a transformed matrix M', which is stored, via a temporary memory 5, in a database 11. Various transformed images of persons 1 can thus be stored in database 11. Because the images are transformed in the way described, it is not practically feasable to convert them back into a form which can be read or displayed by other (not-authorized) persons. In part II of the system, where the operational stage is executed, the image of a person 1' is taken by a camera 6, the output of which is ordered in the form of a matrix N and temporarily stored in a memory 7. Subsequently matrix N is transformed, in a processor 8 viz. by means of matrix permutation in exactly the same way as matrix M was transformed in processor 4. The result, N', is output to a temporary memory 9.

Subsequently a matching process is performed by a processor 10, which reads the various matrices M' -the transformed reference data strings- of various persons 1, stored in the database 11, and compares them with the transformed input data string, the matrix N'. The result of matching M'- N' is (for instance) output to terminal 12 if the matching is positif, indicating that person 1' indeed is the same as person 1.

## Claims

1. Method for digital image recognition by matching an input data string resulting from scanning a physical object or at least part thereof, with a reference data string resulting from scanning a physical reference object or at least part thereof, **CHARACTERIZED BY** next steps:
a. said reference data string is transformed using a transformation function resulting in a transformed reference data string which is stored;
b. said input data string is transformed using said transformation function resulting in a transformed input data string;
c. said transformed input data string is compared with said transformed reference data string using a comparison function, resulting in a comparison result.

2. Method according to claim 1, **CHARACTERIZED IN that** said transformation function is a one-way function.

3. Method according to claim 1, **CHARACTERIZED IN that** said input data string and said reference data string are ordered in the form of respective matrices while said transformation function comprises permutation of said matrices.

4. Method according to claim 1, **CHARACTERIZED IN that** said input data string and said reference data string are ordered in the form of respective matrices while said transformation function comprises similarity tranformation of said matrices.

5. Method according to claim 1, **CHARACTERIZED IN that** said physical objects are human body parts like faces, fingerprints irises, etc.

6. System for digital image recognition, comprising matching means (10) for matching an input data string resulting from scanning, by scanning means (6), a physical object (1') or at least part thereof, with a reference data string resulting from scanning, by scanning means (2), a physical reference object (1) or at least part thereof, **CHARACTERIZED BY** transformation means (4) for transforming said reference data string using a transformation function, resulting in a transformed reference data string which is stored in storage means (11), as well as transformation means (8) for transforming said input data string using said transformation function, resulting in a transformed input data string, and by matching means (10) for comparing said transformed input data string with said transformed reference data string using a comparison function, resulting in a comparison result (12).
